# EUROPEAN PATENT SPECIFICATION

(11) **EP 4 021 946 B1**
(45) Date of publication and mention of the grant of the patent: **05.07.2023**
(21) Application number: 20767863.2
(22) Date of filing: 31.08.2020
(51) Int. Cl.: C08B 1/00, C08B 15/06

(54) **CELLULOSE PRETREATMENT**
VORBEHANDLUNG VON CELLULOSE
PRÉTRAITEMENT DE CELLULOSE

(30) Priority: 30.08.2019 FI 20195717
(43) Date of publication of application: 06.07.2022
(73) Proprietor: Infinited Fiber Company Oy, 02150 Espoo (FI)
(72) Inventor: HARLIN, Ali, 02330 Espoo (FI); MALANIN, Erkki, 02330 Espoo (FI); MÄKELÄ, Jani, 02330 Espoo (FI)
(74) Representative: Laine IP Oy
(86) International application number: PCT/FI2020/050560
(87) International publication number: WO 2021/038136

(56) References cited:
- WO-A1-2011/051882
- WO-A1-2014/202354

## Description

### FIELD

The present invention relates to a method of pretreating recycled cotton. In particular, the method relates to pretreating recycled cotton for use in the formation of cellulose carbamate, or in other words the invention relates to use of a method of pretreating recycled cotton in the preparation of cellulose carbamate.

### BACKGROUND

Cellulose is partly soluble in an aqueous solution of sodium hydroxide in a concentration of about 10 % w/w. The amount of cellulose that is soluble in NaOH/H₂O depends on degree of polymerization and also mode of crystallinity. Isogai investigated the solubility of cellulose from several sources but never succeeded in preparing cellulose solutions of higher concentrations than 5 %. A method for complete dissolution of cellulose in lye solutions was discloses in US patent application publication 5,410,034. For cellulose to dissolve in alkaline aqueous media, it needs to be cooled well below room temperature. Soube *et al.* completed the phase diagram for the ternary system cellulose/NaOH/H₂O . Taking the amphiphilic properties of cellulose into account, it is not surprising that it has been shown that cellulose in NaOH/H₂O is in fact not completely dissolved but forms aggregates.

The procedure for dissolving cellulose in aqueous alkali is based on a freeze-thaw method. The solvent is pre-cooled to below the freezing point of water before cellulose is added and kept cold until the polymer is completely dissolved. Cellulose carbamate derived from dissolving pulp dissolves readily in an alkali solution, such as an NaOH solution without the need for freezing and thawing. Cotton is, however, more difficult and will not readily dissolve, primarily due to its cell wall structure having multiple fibril layers.

The freezing and thawing of polymer solutions on an industrial scale is impractical both economically and energetically. Both freezing and thawing consume energy and time, and reduce the overall efficiency and sustainability of the process. WO 2014/202354 A1 discloses a method for microfibrillating cellulose from e.g. mechanical or chemical pulp, waste paper or annual plants, comprising: mechanically shearing an aqueous mixture of cellulose fibers having an initial solid content of 30-70 wt%, preferably 40-60 wt% and more preferably 50-60 wt%, at 40-120 °C in an extruder such as a single screw extruder, a twin-screw extruder or a conical extruder. WO 2011/051882 A1 discloses a method for microfibrillating cellulose from e.g. cotton and cereals, comprising: mechanically shearing an aqueous mixture of cellulose fibers having an initial solid content above 50 wt% in an extruder.

### SUMMARY OF THE INVENTION

It is an aim of the present invention to overcome at least some of the problems described above and provide a method of pretreating recycled cotton comprising steps in which the recycled cotton and a liquid are subjected to mechanical working to open the fibril structure of cellulose cell walls, whereby accessibility of cellulose fibrils to solvents and chemical agents is increased. The increased accessibility to the fibrils in turn provides improved efficiency and yields in the subsequent production of cellulose derivates, which derivates are useful in e.g. dissolving and preparation of products such as fibers, films, foams and coatings.

The invention is defined by the features of the independent claims. Some specific embodiments are defined in the dependent claims.

According to a first aspect of the present invention, there is provided a method for pretreating recycled cotton comprising the steps of providing a mixture having a solid content, said mixture comprising cellulose, and a liquid, and mechanically working the mixture to open the fibril structure of cell walls of cellulose. The mechanical working comprises shear mixing in a continuous mechanical mixing device.

According to a second aspect, there is provided a use of a method for pretreating cellulose in the preparation of cellulose carbamate. The mixture provided in the method comprise cellulose, a liquid, and the mixture further comprises urea.

Considerable advantages are obtained by means of the invention. The present invention provides a method of pretreating recycled cotton comprising steps in which cellulose and a liquid are subjected to mechanical working to open the fibril structure of cellulose cell walls, whereby accessibility of cellulose fibrils to solvents and chemical agents is increased. The increased accessibility to the fibrils in turn provides improved efficiency and yields in the subsequent production of cellulose derivates, which derivates are useful in e.g. dissolving and preparation of products such as fibers, films, foams and coatings. The cell wall is disintegrated and the diffusion hindrance of solvents or other chemicals is reduced. A high accessibility is an essential prerequisite for a homogeneous substitution of cellulose material. Cellulose structure can be affected by means of mechanical activation.

Next embodiments will be described more closely with reference to the attached drawings and a detailed description.

### BRIEF DESCRIPTION OF THE DRAWINGS

FIGURE 1 is an electron micrograph showing cellulose fibrils milled under dry conditions;
FIGURE 2 is an electron micrograph showing cellulose fibrils milled under high consistency conditions and
FIGURE 3 is an electron micrograph showing cellulose fibrils milled under low consistency conditions.

### EMBODIMENTS

### DEFINITIONS

In the present context, the term "extruder" means any continuous compounder providing 1) shear mixing, 2) continuous operation and 3) positive replacement. Extruders include those that are capable of handling high consistency pulp.

"High consistency pulp" is one which has a solid content of cellulose of greater than 5 wt% and a liquid, typically in excess of 20 wt% and a liquid.

"Extra high consistency pulp" is a pulp that has a solid content of cellulose of greater than 20 wt% and a liquid, which does not release free water.

By means of embodiments of the present invention it has surprisingly been found that accessibility of cellulose to solvents and other chemicals can be increased in a pretreatment in which cellulose and a liquid are subjected to mechanical working. It has surprisingly been found that freeze thawing may be completely eliminated from pretreatment process, *i.e.* prior to dissolving including in the cases of demanding pulps having multiple fibril layers such as cotton, cotton linter, hemp, flex, linen and other stalk and seed fibres

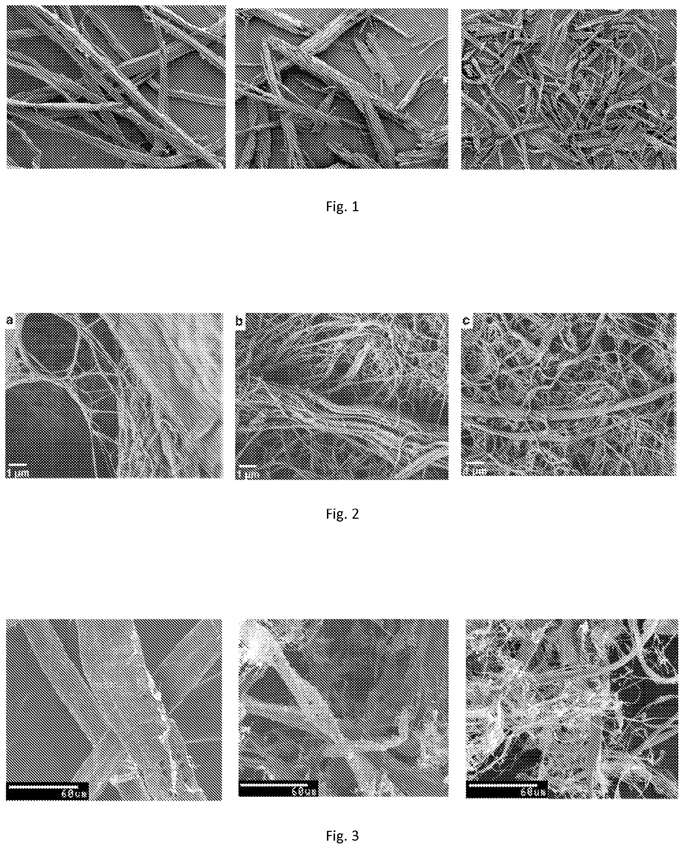

FIGURE 1 illustrates milled dry pulp. As can be clearly seen cellulose is hornificated; no or very few fibrils are made accessible in the dry milling process.

FIGURE 2 illustrates an example in which high consistency pulp is milled., or pulp with a high solids content but not totally dry pulp. Fibrils are well-separated and accessible in the milled fibres.

FIGURE 3 illustrates an example in which low consistency pulp. Fibrils are better separated than those in milled dry pulp, but not as well-separated or as accessible as in milled high consistency pulp.

### DETAILED DESCRIPTION

Recycled cotton may be pretreated by methods according to embodiments of the present invention. According to an embodiment the method for pretreating recycled cotton comprises the steps of providing a mixture having a solid content, said mixture comprising cellulose, and a liquid, and mechanically working the mixture to open the fibril structure of cell walls of cellulose. The mechanical working comprises shear mixing in a continuous mechanical mixing device.

The mixture has an initial solid content of at least 50 % by weight of the mixture, preferably the initial solid content is 50 % or more by weight of the mixture, for example more than 50 % by weight of the mixture such as 51 % by weight of the mixture, 52 % by weight of the mixture or for example, 55 % by weight of the mixture, suitably at least 65 % by weight of the mixture, up to 75 % by weight of the mixture, most preferably 71 % or 72 % or 73 % or 74 % by weight of the mixture. Mechanical working of extra high consistency pulps, such as these as compared to low consistency pulps provides improved dislocation of lamella in fibre cell walls leading to improved absorption of chemicals such as urea on a molecular level in the mixture, or pulp. The initial solid content of at least 50 wt% by weight of the mixture ensures efficient handling of the cellulose, *i.e.* that the cellulose walls are acted on by sufficient shear forces to effectively break down cell walls and increase accessibility of the cellulose fibrils of solvents and chemicals. An initial solid content of lower than at least 50 %, such as less than about 50 % by weight results in a less efficient handling of the cellulose. Best handling of the cellulose occurs when the initial solids content is at least 50 % by weight of the mixture, preferably the initial solid content is 50 % or more by weight of the mixture, for example, more than 50 % by weight of the mixture, such as 51 % by weight of the mixture, 52 % by weight of the mixture or for example, 55 % by weight of the mixture, suitably at least 65 % by weight of the mixture, up to 75 % by weight of the mixture, most preferably 71 % or 72 % or 73 % or 74 % by weight of the mixture.

The solid content does not exceed 75 % by weight of the mixture. Maintaining a high consistency pulp in which the solid content does not exceed 75 % by weight of the mixture ensures that hornification or recrystallization due to deactivation caused by losing free hydroxyl groups does not occur, and thus the cell wall structure is not closed to absorbing chemicals.

Between the limits described in the above mentioned embodiments, space is sufficient so that shear forces can act on the cellulose without tearing fibrils from the surface of the cellulose and so that accessibility of the fibrils on the fibre cell walls to solvents and chemicals is increased, which is optimal. The mixture having solid contents in the above described limits is optimal for cotton as the six layer fibril structure is not wetted through at such solid contents. When cotton is wetted through, the fibril structure locks and it becomes even more difficult to break open the fibril structure to increase accessibility of the cellulosic fibres.

According to an example aspect of the present invention, there is provided a method for pretreating recycled cotton, comprising the steps of providing a mixture having a solid content, said mixture comprising cellulose, and a liquid, and mechanically working the mixture to open the fibril structure of cell walls of cellulose. The mechanical working comprises shear mixing in a continuous mechanical mixing device.

Embodiments of the method are particularly effective in the pretreatment of such demanding pulps having multiple fibril layers such as cotton.

As mentioned above, an embodiment involves mechanically working the mixture to open the fibril structure of cell walls of cellulose. In one embodiment the mixture is continuously fed into the mechanical mixing device. Feeding the material continuously into the mechanical mixing device ensures that energy consumption and time is optimised in the process in which the accessibility to cellulose fibrils is increased.

In one embodiment the mechanical mixing device has a self-cleaning capacity. This allows for the continuous passage of cellulose through the mixing device and clogging free operation of the device, which are both particularly useful attributes in industrial applications.

Various mixing devices may be employed in embodiments of the invention. In an embodiment the mechanical mixing device is selected from the group consisting of knife mill, hammer mill, ball mill, disc type mill, pellet press and extruders.

In a preferred embodiment the mechanical device is a pellet press, *e.g.* a Kahl press. Other pellet presses suitable for the mechanical mixing of cellulose-based materials as described herein, are equally suitable for use in embodiments of the present invention.

In a particular embodiment the mechanical mixing device is an extruder. In a suitable embodiment the mechanical mixing device comprises two or more extruders. In embodiments in which two or more extruders are run in series, cellulose may pass from a first extruder into a further extruder. The cellulose passes into further extruders until at least a part of the cellulose is microfibrillated.

In one embodiment the extruder is selected from the group consisting of counter rotating twin screw extruder, co rotating twin screw extruder, multiple screw extruder, ram extruder, planetary extruder, continuous banbury mixer, continuous zigma mixer, conical extruder and a combination thereof.

In a further embodiment the mechanical mixing device is a disc type mill.

As mentioned above, a purpose of the mechanical mixing device is to fibrillate the cellulose. Thus, in one embodiment the mechanical working comprises opening the fibril structure of cell walls of cellulose.

It is desirable to achieve certain levels of fibrillation. As fibrillation increases, the accessibility of fibrils to reactant chemicals is increased. In an embodiment the mixture is mechanically worked until at least a part of the cellulose is microfibrillated, preferably at least 40% by weight of the cellulose is microfibrillated, particularly at least 60% by weight of the cellulose is microfibrillated, suitably at least 75% by weight of the cellulose is microfibrillated, typically at least 95% by weight of the cellulose is microfibrillated.

In embodiments, the wet cellulose media has an alkaline or slightly alkaline pH. An alkaline or slightly alkaline pH is beneficial in fibrillating cellulose. As mentioned above, and as shown in the Figures, it is clear that a high consistency pulp is most easily fibrillated and does not undergo hornification. Thus, at least some liquid is required to be mixed with cellulose either before it is fed into the mixing device or fed into the mixing device separately or fed into the mixing device simultaneously with the cellulose. The liquid is water having a pH value in excess of 7.0, preferably 7.2 or more, typically 7.3 or 7.4, suitably 7.5 or more, and optionally comprises added hydroxide ions. In one embodiment, the pH of the liquid is 10.0 or higher, preferably the pH is 10.5 or higher, optionally the pH is in the range of 7.0 to 14.0.

In a further embodiment the alkaline or slightly alkaline liquid further comprises surface active substances, such as surface active substances selected from the group consisting of anionic surfactants such as dodecylbenzene sodium sulphonate, nonionic surfactants such as nonylphenol ethoxylate, cationic surfactants such as cetyl trimethyl ammonium bromide (CTAB) and amphoteric surfactants such as Albegal A (AMS) or alkylamine polyglycol ether. Surfactants help prevent back settling of impurities that have already been removed from the cellulose media and in general increase reactivity by lowering the surface tension and thus enabling better contact between reactants and the cellulose media, especially under alkaline conditions.

The mechanical working is carried out at a temperature in order to control the moisture content of the cellulose. A desirable final solid content of the worked cellulose is in excess of 85 % by weight of the mixture. The mechanical working may be repeated until the desired solid content is achieved. The final solid content may not exceed 95 % by weight of the composition. In such cases, hornification occurs.

Thus, in embodiments the mechanical working is carried out a temperature in the range of 0 to 100°C, preferably 10 to 80°C, suitably 20 to 70°C, particularly 30 or 40 or 50 or 60°C.

Shear rate may also contribute to desirable properties in the resultant pretreated cellulose. In an embodiment the mechanical working is carried out at a rate of ≥ 80 s⁻¹, preferably ≥ 90 s⁻¹, particularly ≥ 100 s⁻¹. In some embodiments, the shear rate may be markedly higher, for example 300 to 500 s⁻¹, even as high as 1000 s⁻¹. For example, in the microfibrillation and production of nanocellulose, markedly higher shear rates are employed.

There is, as mentioned above a preferred range for the temperature in the mixing device. The temperature may be controlled by means of a cooling device. In one embodiment the mixing device is cooled, preferably cooled with circulating water, to maintain the temperature in the mixing device at or below a maximum temperature of 100°C. In embodiments relating only to the pretreatment phase, the maximum temperature is particularly important. If the temperature of the mechanically worked cellulose exceeds 100 °C, hornification occurs.

As described earlier, certain degrees of fibrillation may be achieved by passing the mixture through an extruder one or more times. Accordingly, in an embodiment the mixture passes through the extruder one or more times.

Further embodiments relate to further method steps. Since mechanical working of the cellulose causes fibrillation, the accessibility of cellulose fibres/fibrils to reagents is improved compared to non fibrillated cellulose. The method comprises the further step of adding to the mixture urea. In a further embodiment 11-22 percent by weight of the mixture of urea is added and 0.4 - 1.1 percent by weight of the mixture of peroxide (H₂O₂) is added to adjust degree of polymerization of the cellulose. The material is worked out until all the solutions are completely absorbed and the mass has reached even composition. The mechanically treated material is then reacted in a separate phase in which the mechanically treated material is mixed and heated at a temperature in the range of 133 to 155°C for a period in the range of 2 to 4 hours.

In a further embodiment the mixture is mechanically worked and rapidly heated, directly or indirectly, to a temperature in the range of 120 to 135 °C, typically 133 °C and further heated to a second temperature. Typically, heating is continued until a temperature in the range of 133-140 °C , typically135 °C has been reached. Mechanical working and heating causes urea and cellulose to react to form cellulose carbamate.

Cellulose carbamate can be formed in high yields by embodiments of the invention in a relatively short time period. For example, in embodiments the mechanical working as described above provides microfibrillated cellulose in the range of 40% by weight of the cellulose to 95% by weight of the cellulose in a time period of 30 minutes to 5 hours, preferably in a period of 1 to 4 hours, suitably 2 hours or 3 hours. The addition of urea to the mixture with heating as described above and mechanical working as described above results in the formation of cellulose carbamate from a cellulose starting material in a period of 1 to 6 hours, preferably 2 to 5 hours, suitably 3 hours or 4 hours.

Cellulose carbamate provided by embodiments of the method may be recovered for storage or direct for use in other applications. The cellulose carbamate provided by embodiments of the method is dry. In further embodiments the cellulose carbamate is washed with water and then dried in a drier. Drying at temperatures above 155°C, may be detrimental to the cellulose carbamate product. Therefore, the drying preferably takes place at a temperature less than or equal to 133°C. The temperature used in the actual carbamation stage is typically not exceeded in the drying stage.

### EXAMPLES

### Example 1

Post-consumer cotton waste material was opened by carding down to yarn fragments and fibres. The cotton material contained less than 10 % of other fibre materials. The DP of the cellulose varied between 600 and 1000 kDa. To the material was added water into which urea was dissolved (220 g/kg) to reach a nitrogen content of 1.7 %. Hydrogen peroxide (0.75 %) was added to control the molar mass to a DP of 360 kDa, equivalent to a viscosity of 280 cP. Each of the materials had the same chemical loading, while the solid content level before mechanical processing was the different in each experiment (57 % (wet), 72 % (optimal), and 77 % (dry)). The materials were treated mechanically and compressed by nozzle multiple times until a solid content of 91 - 93 % was reached. The wet, optimal and dry samples required 9, 2 and 1 passages through the nozzle, respectively before the desired solid content was reached. The products were heated at a temperature in the range of 133 °C - 155 °C for a period of 3 hours for drying.

Carbamates were made with either a 250 l Drais mixer reactor or a 600 l Lödige mixer reactor. Initially, the pulp / cotton was vacuum dried to about 85% dry matter. Hydrogen peroxide was mixed with aqueous urea and the mixture was added to the pulp. After the chemical addition, the target dry matter content was 65-70% to facilitate flexible compaction. Compaction was done twice with a Kahl device. Pelletized (compacted) pulp was put back into the mixing reactor where steam was started. Calculation of the carbamation reaction time was started when the temperature reached 115 °C and the temperature was increased to 140-150 °C. Total reaction time was 4 hours. After carbamation, the pulp was ground with a grinder twice to improve solubility.

Spinning dopes were made from each of the products and fibres were spun.

**Table 1**

| Sample | Consistency (%) | Dope | Fibre | |
|---|---|---|---|---|
| | | Insoluble fraction (kW) | Fineness (dtex) | Strength (cN/dtex) |
| Wet | 57 | 6000 | ≥1.7 | ≤1.9 |
| Optimal | 72 | 250 | 1.2 | 2.7 |
| Dry | 77 | 3500 | 1.5 | 2.1 |

From Table 1 it can be seen that by embodiments according to the present invention mechanically working the optimal sample having an optimal consistency in the range of about 70 - 75 %, by embodiments of methods described hereinabove, opens cellulose cell walls and fibrillates cellulose, improving accessibility of chemical reagents. The mechanically pretreated fibres are suitable for use in various processes, for example for carbamation with urea, providing a spin dope and spinning fine fibres with good strength.

### Example 2

Cellulose pulp raw material for cellulose carbamate manufacture process was prepared from recycled cotton textile waste (with CED viscosity of 330 ± 30 ml/g, modified ISO 5351). Pulp preparation process was carried out as described in Finnish patent application FI20205250. Cellulose carbamates were made with either a 600 1 Lödige or a 2000 l Lödige mixer reactor. The pulp prepared from the recycled cotton textile waste was dewatered in the presence of sodium hydroxide dosage of 6 g/kg of air dry cellulose material under vacuum conditions to about 85% dry matter content of the mixture. A pH value of the liquid in alkali treated material was determined by standing 10 g of dewatered material in 100 g of water. pH value was 10.5. Hydrogen peroxide (0.3 ± 0.1 % H₂O₂ dosage of dry cellulose pulp) was mixed with aqueous solution of urea (18.5 % urea dosage of dry cellulose pulp) and the mixture was added to the pulp. After addition of the aqueous solution of urea and hydrogen peroxide, the obtained dry matter content of the cellulose-chemical-liquid mixture was 72±2 % to facilitate flexible mechanical pretreatment. The mechanical pretreatment was done six times (6) subsequentially by exposing shear mixing in a continuous mechanical mixing device by using a Kahl device. Mechanically pretreated pulp was put back into the mixing reactor where steam was started. Calculation of the carbamation reaction time was started when the temperature reached 133 °C and the temperature was increased to 135±2 °C for the actual carbamation reaction. Total reaction time was 180 min after reaching the target initial temperature of 133 °C. After carbamation in the pellet form, the cellulose carbamate pellets were ground for the optional post-treatment processing of cellulose carbamate or its direct end uses. The degree of polymerization of cellulose was 248±20 ml/g (as CED viscosity, ISO 5351) measured in the grinded, washed and dried cellulose carbamate. The degree of substitution of cellulose carbamate measured by means of the total nitrogen content in the washed oven dry cellulose carbamate (according to the SFS 5505:1988, modified) was 30-40 % higher in case of the mechanically pretreated pulp with added alkali (6 g/kg NaOH of dry pulp) as shown in this example compared to the product prepared using the similar process but in the absence of sodium hydroxide in the pulp dewatering stage.

Example of direct end use of cellulose carbamate powder prepared by using the above described process: The cellulose carbamate obtained from carbamation process was further dissolved for production of cellulose carbamate fibres by the wet spinning process: The ground air dry cellulose carbamate powder was slurried and dissolved in sodium zincate (zinc oxane) solution to the target cellulose carbamate content of 6.5 ± 0.2 % (n=10), sodium hydroxide content of 6.5 ± 0.2 % (n=10). The cellulose carbamate dope obtained from the dissolving process was subsequently filtered using the two-stage backflush filtering process using the 20 µm filter media in the second filtration stage. Wet spinning of filtered and deaerated cellulose carbamate dope was carried out using the spin bath optimized for cellulose carbamate process containing e.g. sodium sulphate and free sulphuric acid. The applied godet stretching stress was 86 ± 8 % (n=56) under hot bath stretching conditions. The filament tow obtained from spinning was cut into staple fibres with cut length of 40 mm. The target filament titre was 1.3 dtex. Fibre tenacity at break measured from the staple fibres was 23 ± 1 cN/tex (n=56) with the elongation at break of 16.4 ±1.5 % (n=56) (SFS-EN ISO 5079).

### Example 3

### Mechanical treatment of pulp using a hammer mill.

Cellulose pulp raw material for cellulose carbamate manufacture process was prepared from recycled cotton textile waste (with CED viscosity of 330 ± 30 ml/g, modified ISO 5351). Pulp preparation process was carried out as described in Finnish patent application FI20205250. The pulp prepared from the recycled cotton textile waste was dewatered under vacuum conditions to about 85% dry matter content of the mixture. Hydrogen peroxide (0.3 ± 0.1 % H₂O₂ dosage of dry cellulose pulp) was mixed with aqueous solution of urea (18.5 % urea dosage of dry cellulose pulp) and the mixture was added to the pulp. After addition of the aqueous solution of urea and hydrogen peroxide, the obtained dry matter content of the cellulose-chemical-liquid mixture was 72±2 % to facilitate flexible mechanical pretreatment. Dewatering and mixing of additional water and chemicals were carried out in a 600 1 Lödige mixing reactor. The chemical mixed and solid content optimized pulp was divided into two separate batches for the subsequent mechanical treatment trials: **1)** The mechanical pretreatment was carried out three times (3) subsequentially by exposing shear mixing in a continuous mechanical mixing device by using a hammer mill (Kamas type hammer mill with a sieve plate with a hole diameter of 3 mm). **2)** The mechanical pretreatment was carried out six times (6) subsequentially by exposing shear mixing in a continuous mechanical mixing device by using a Kahl device (a pellet press). Mechanically pretreated pulps were separately spreader into a stainless steel cooking pans as thin layer of circa 1 cm. The cooking pans were put into the ventilated and circulated air oven at 140 °C for 180 min. The obtained cellulose carbamates were ground using a lab scale hammer grinding mill using a sieve with the hole diameter of 0.5 mm. Characterization of quality properties of two different cellulose carbamate samples were based on the following procedure: The cellulose carbamates obtained from carbamation process were further dissolved for preparation of corresponding cellulose carbamate dopes

(cellulose carbamate solutions) by slurrying and dissolving ground powders in sodium zincate (zinc oxane) solution to the target cellulose carbamate content of 6.5 ± 0.2 %, sodium hydroxide content of 6.5 ± 0.2 %.

**Table 2**

| Sample | Cellulose carbamate (dry powder after washing) | | Cellulose carbamate dope (solution) | |
|---|---|---|---|---|
| | **Total nitrogen content (N %)** | **Water insoluble fraction (%)** | **Kw** | **K_{R}** |
| Kahl device | 1.8 | 95.8 | 300 | 190 |
| Hammer mill | 1.7 | 94.9 | 160 | 90 |

From Table 2 it can be seen that by embodiments according to the present invention mechanically working by using a Kahl device produced a slightly higher degree of substitution measured by means of the total nitrogen content and the content of water insoluble fraction of the washed and dried cellulose carbamate sample compared to sample prepared by using a hammer mill device. KW value and KR index (KR corresponds to viscosity corrected KW value) indicate filterability of cellulose carbamate solutions, the lower the value, the smaller is the amount of filter clogging size (>10 µm) unreactive particles found in the prepared sample solutions. Thus, the mechanical pretreatment by using a hammer mill produced a better quality cellulose carbamate dope based on the filterability analysis.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in management and recycling of cellulose for use in the textiles industry as well as in the preparation of virgin cellulose for use in wider industry.

### CITATION LIST

### Patent Literature

US 5410034 A

### Non Patent Literature

Isogai, A. and Atalla, R.H. (1998). Dissolution of Cellulose in Aqueous NaOH Solutions. Cellulose, 5(4): 309-319.
Sobue, H., Kiessig, H. and Hess, K. (1939). The System: Cellulose-Sodium Hydroxide-Water in Relation to the Temperature. Zeitschrift für Physikalishe Chemie, B43: 309.

## Claims

1. A method for pretreating recycled cotton comprising the steps of
• providing a mixture having a solid content, wherein the mixture has an initial solid content of at least 50 wt % by weight of the composition and the solid content does not exceed 75 wt% by weight of the composition said mixture comprising
o cellulose, and
o water having a pH value in excess of 7.0,
• adding urea to the mixture, and
• mechanically working the mixture a temperature in the range of 20 to 100°C to open the fibril structure of cell walls of cellulose, said mechanical working comprising shear mixing in a continuous mechanical mixing device.

2. The method according to claim 1, wherein the mixture has an initial solid content of at least 65 wt% by weight of the composition, particularly up to 71 % or 72 % or 73 % or 74 % by weight of the mixture.

3. The method according to any of the preceding claims, wherein the mixture is continuously fed into the mechanical mixing device.

4. The method according to any of the preceding claims, wherein the mechanical mixing device has a self-cleaning capacity.

5. The method according to any of the preceding claims wherein the mechanical mixing device is selected from the group consisting of knife mill, hammer mill, ball mill, disc type mill, pellet press devices and extruders.

6. The method according to any of the preceding claims, wherein the mechanical mixing device is a pellet press device.

7. The method according to claim 5 or 6, wherein the mechanical mixing device is an extruder selected from the group consisting of counter rotating twin screw extruder, co rotating twin screw extruder, multiple screw extruder, ram extruder, planetary extruder, continuous banbury mixer, continuous zigma mixer, conical extruder and a combination thereof.

8. The method according to any of the preceding claims, wherein the mechanical working comprises opening the fibril structure of cell walls of cellulose

9. The method according to any of the preceding claims, wherein the mixture is mechanically worked until at least a part of the cellulose is microfibrillated.

10. The method according to any of the preceding claims, wherein the pH value of the water is in excess of 7.2 or more, typically 7.3 or 7.4, suitably 7.5 or more, and optionally comprises added hydroxide ions.

11. The method according to any of the preceding claims, wherein the pH of the liquid is 10.0 or higher, preferably the pH is 10.5 or higher, optionally the pH is in the range of 7.0 to 14.0

12. The method according to any of the preceding claims, wherein the mechanical working is carried out a temperature in the range of 20 to 80°C, suitably 20 to 70°C, particularly 30 or 40 or 50 or 60°C.

13. The method according to any of the preceding claims, wherein the mixing device is cooled, preferably cooled with circulating water.

14. The method according to any of the preceding claims, wherein the mixture passes through the extruder one or more times.

15. The method according to any of the preceding claims, wherein the mixture comprising urea is heated to a first temperature in the range of 120 to 135 °C, typically 133 °C, further heated to a second temperature in the range of 133 to 155 °C to form cellulose carbamate.

16. The method according to claim 11, wherein the cellulose carbamate is recovered, washed and dried, preferably at a temperature below 155°C, particularly at a temperature less than or equal to 133°C.

## Patentansprüche

1. Verfahren zum Vorbehandeln von recycelter Baumwolle, umfassend die Schritte
- Bereitstellen einer Mischung mit einem Feststoffgehalt, wobei die Mischung einen anfänglichen Feststoffgehalt von mindestens 50 Gew.-% nach Gewicht der Zusammensetzung aufweist und der Feststoffgehalt 75 Gew.-% nach Gewicht der Zusammensetzung nicht überschreitet, wobei die Mischung umfasst
- Cellulose und
- Wasser mit einem pH-Wert über 7,0,
- Hinzufügen von Harnstoff zu der Mischung und
- mechanisches Bearbeiten der Mischung eine Temperatur im Bereich von 20 bis 100 °C, um die Fibrillenstruktur von Zellwänden aus Cellulose zu öffnen, wobei das mechanische Bearbeiten Schermischen in einer kontinuierlichen mechanischen Mischvorrichtung umfasst.

2. Verfahren nach Anspruch 1, wobei die Mischung einen anfänglichen Feststoffgehalt von mindestens 65 Gew.-% nach Gewicht der Zusammensetzung, insbesondere bis zu 71 % oder 72 % oder 73 % oder 74 % nach Gewicht der Mischung, aufweist.

3. Verfahren nach einem der vorstehenden Ansprüche, wobei die Mischung kontinuierlich in die mechanische Mischvorrichtung eingespeist wird.

4. Verfahren nach einem der vorstehenden Ansprüche, wobei die mechanische Mischvorrichtung eine Selbstreinigungsfähigkeit aufweist.

5. Verfahren nach einem der vorstehenden Ansprüche, wobei die mechanische Mischvorrichtung ausgewählt ist aus der Gruppe, bestehend aus Messermühle, Hammermühle, Ballmühle, Mühle der Scheibenart, Pelletpressenvorrichtungen und Extrudern.

6. Verfahren nach einem der vorstehenden Ansprüche, wobei die mechanische Mischvorrichtung eine Pelletpressenvorrichtung ist.

7. Verfahren nach Anspruch 5 oder 6, wobei die mechanische Mischvorrichtung ein Extruder ist, ausgewählt aus der Gruppe, bestehend aus gegenläufigem Doppelschneckenextruder, gleichläufigem Doppelschneckenextruder, Mehrschneckenextruder, Kolbenstangenextruder, Planetenextruder, kontinuierlichem Banbury-Mischer, kontinuierlichem Zigma-Mischer, konischem Extruder und einer Kombination davon.

8. Verfahren nach einem der vorstehenden Ansprüche, wobei das mechanische Bearbeiten Öffnen der Fibrillenstruktur von Zellwänden aus Cellulose umfasst.

9. Verfahren nach einem der vorstehenden Ansprüche, wobei die Mischung mechanisch bearbeitet wird, bis mindestens ein Teil der Cellulose mikrofibrilliert ist.

10. Verfahren nach einem der vorstehenden Ansprüche, wobei der pH-Wert des Wassers über 7,2 oder mehr, üblicherweise 7,3 oder 7,4, zweckmäßigerweise 7,5 oder mehr beträgt und wahlweise hinzugefügte Hydroxidionen umfasst.

11. Verfahren nach einem der vorstehenden Ansprüche, wobei der pH-Wert der Flüssigkeit 10,0 oder höher ist, der pH-Wert vorzugsweise 10,5 oder höher ist, wobei der pH-Wert wahlweise im Bereich von 7,0 bis 14,0 liegt.

12. Verfahren nach einem der vorstehenden Ansprüche, wobei das mechanische Bearbeiten eine Temperatur im Bereich von 20 bis 80 °C, zweckmäßigerweise 20 bis 70 °C, insbesondere 30 oder 40 oder 50 oder 60 °C ausgeführt wird.

13. Verfahren nach einem der vorstehenden Ansprüche, wobei die Mischvorrichtung gekühlt, vorzugsweise mit zirkulierendem Wasser gekühlt wird.

14. Verfahren nach einem der vorstehenden Ansprüche, wobei die Mischung ein oder mehrere Male durch den Extruder hindurchläuft.

15. Verfahren nach einem der vorstehenden Ansprüche, wobei die Harnstoff umfassende Mischung auf eine erste Temperatur im Bereich von 120 bis 135 °C, üblicherweise 133 °C erwärmt, weiter auf eine zweite Temperatur im Bereich von 133 bis 155 °C erwärmt wird, um Cellulosecarbamat zu bilden.

16. Verfahren nach Anspruch 11, wobei das Cellulosecarbamat rückgewonnen, gewaschen und getrocknet wird, vorzugsweise bei einer Temperatur unter 155 °C, insbesondere bei einer Temperatur geringer als oder gleich 133 °C.

## Revendications

1. Procédé de prétraitement de coton recyclé, comprenant les étapes consistant à
- fournir un mélange présentant une teneur en solides, dans lequel le mélange présente une teneur initiale en solides d'au moins 50 % en poids en poids de la composition et la teneur en solides ne dépasse pas 75 % en poids en poids de la composition, ledit mélange comprenant
- une cellulose, et
- de l'eau présentant une valeur de pH de plus de 7,0,
- ajouter de l'urée au mélange, et
- travailler mécaniquement le mélange à une température dans la plage de 20 à 100 °C pour ouvrir la structure fibrillaire des parois cellulaires de cellulose, ledit travail mécanique comprenant un mélange par cisaillement dans un dispositif de mélange mécanique continu.

2. Procédé selon la revendication 1, dans lequel le mélange présente une teneur initiale en solides d'au moins 65 % en poids en poids de la composition, en particulier jusqu'à 71 % ou 72 % ou 73 % ou 74 % en poids du mélange.

3. Procédé selon l'une quelconque des revendications précédentes, dans lequel le mélange est introduit en continu dans le dispositif de mélange mécanique.

4. Procédé selon l'une quelconque des revendications précédentes, dans lequel le dispositif de mélange mécanique présente une capacité d'auto-nettoyage.

5. Procédé selon l'une quelconque des revendications précédentes, dans lequel le dispositif de mélange mécanique est sélectionné dans le groupe consistant en un broyeur à couteaux, un broyeur à marteaux, un broyeur à boulets, un broyeur à disque, les dispositifs de presse à granulés et les extrudeuses.

6. Procédé selon l'une quelconque des revendications précédentes, dans lequel le dispositif de mélange mécanique est un dispositif de presse à granulés.

7. Procédé selon la revendication 5 ou 6, dans lequel le dispositif de mélange mécanique est une extrudeuse sélectionnée dans le groupe consistant en une extrudeuse à double vis contrarotative, une extrudeuse à double vis corotative, une extrudeuse à vis multiples, une extrudeuse à piston, une extrudeuse planétaire, un mélangeur Banbury continu, un mélangeur zigma continu, une extrudeuse conique et une combinaison de ceux-ci.

8. Procédé selon l'une quelconque des revendications précédentes, dans lequel le travail mécanique comprend l'ouverture de la structure fibrillaire des parois cellulaires de la cellulose.

9. Procédé selon l'une quelconque des revendications précédentes, dans lequel le mélange est travaillé mécaniquement jusqu'à ce qu'au moins une partie de la cellulose soit microfibrillée.

10. Procédé selon l'une quelconque des revendications précédentes, dans lequel la valeur du pH de l'eau est supérieure à 7,2 ou plus, typiquement de 7,3 ou 7,4, de manière appropriée de 7,5 ou plus, et comprend facultativement des ions hydroxyde ajoutés.

11. Procédé selon l'une quelconque des revendications précédentes, dans lequel le pH du liquide est de 10,0 ou plus, de préférence le pH est de 10,5 ou plus, facultativement le pH est dans la plage de 7,0 à 14,0.

12. Procédé selon l'une quelconque des revendications précédentes, dans lequel le travail mécanique est effectué à une température dans la plage de 20 à 80 °C, de manière appropriée de 20 à 70 °C, en particulier de 30 ou 40 ou 50 ou 60 °C.

13. Procédé selon l'une quelconque des revendications précédentes, dans lequel le dispositif de mélange est refroidi, de préférence refroidi avec de l'eau en circulation.

14. Procédé selon l'une quelconque des revendications précédentes, dans lequel le mélange passe à travers l'extrudeuse une ou plusieurs fois.

15. Procédé selon l'une quelconque des revendications précédentes, dans lequel le mélange comprenant de l'urée est chauffé à une première température dans la plage de 120 à 135 °C, typiquement de 133 °C, chauffé davantage à une seconde température dans la plage de 133 à 155 °C pour former du carbamate de cellulose.

16. Procédé selon la revendication 11, dans lequel le carbamate de cellulose est récupéré, lavé et séché, de préférence à une température inférieure à 155 °C, en particulier à une température inférieure ou égale à 133 °C.
